# EUROPEAN PATENT SPECIFICATION

(11) **EP 1 016 558 B1**
(45) Date of publication and mention of the grant of the patent: **28.12.2005**
(21) Application number: 99308628.9
(22) Date of filing: 29.10.1999
(51) Int. Cl.: B60J 10/00, B29C 47/06, B60R 13/06

(54) **Flexible channel-shaped strip structures**
Flexible kanalförmige Profile
Profilés flexibles à forme de canal

(30) Priority: 29.12.1998 GB 9828771
(43) Date of publication of application: 05.07.2000
(73) Proprietor: GDX North America Inc., Dover Delaware 19901 (US)
(72) Inventor: Gommier, Hervé, 28120 Meslay-Le-Grenet (FR)
(74) Representative: Foster, David Martyn

(56) References cited:
- US-A- 4 103 459
- US-A- 4 188 765
- US-A- 4 232 081
- US-A- 4 447 065
- US-A- 4 542 610
- US-A- 4 676 856
- US-A- 5 165 201

## Description

The invention relates to a channel-shaped strip structure, comprising channel-shaped flexible material, a first part of which material undergoes substantially no reduction in volume when compressed, and including a second, remaining, part of the flexible material which is softer than the first part and which undergoes a reduction in volume when compressed. Embodiments of the invention to be described in more detail below, by way of example only, are strip structures for use for draught-excluding or sealing purposes and/or for attachment to edge flanges around door or other openings, all for use in motor vehicle body construction for example. However, strip structures embodying the invention may be used in other applications.

The invention also relates to a method of making a flexible channel-shaped strip structure, comprising the steps of co-extruding first and second parts of an elastomer or plastomer material which together extend contiguously along the length of the strip structure and form the channel shape and are in a constant relative position along the length of the channel shape, the second part being softer than the first part and which undergoes a reduction in volume when compressed.

A strip structure as first set forth above, and a method as set forth above of making a strip structure are shown for example in US-A-4 103 459. In this case, cellular or foamed flexible material is positioned at predetermined locations in the channel shape to improve sealing, gripping or appearance.

Strip structures of the type referred to above may have to be bent or curved to follow bends or curves in a door or other closable opening to which they are to be filed. It is necessary to ensure that such bends or curves occur smoothly to provide a good appearance.

According to the invention, therefore, the strip structure as first set forth above is characterised in that the second part extends over predetermined portions each comprising less than the whole of the depth of at least one of the side walls of the channel, and comprises a lip spaced apart from and extending generally parallel to and over the majority of the base of the channel.

According to the invention, also, the method as first set forth above is characterised in that the second part of the material extends over at least one predetermined portion less than the whole of the depth of the channel shape, the second part comprising a lip spaced apart from and extending generally parallel to and over the majority of the base of the channel.

Flexible channel-shaped sealing strips embodying the invention will now be described, by way of example only, with reference to the accompanying diagrammatic drawings in which:
Figure 1 is a perspective view showing a strip;
Figures 2,3,4 and 5 are cross-sections through the strip of Figure 1 but showing different constructional arrangements, of which only the arrangement of Figure 4 is in accordance with the invention; and
Figure 6 is a section of the strip taken on the line VI-VI of Figure 3 but bent to follow a curve.

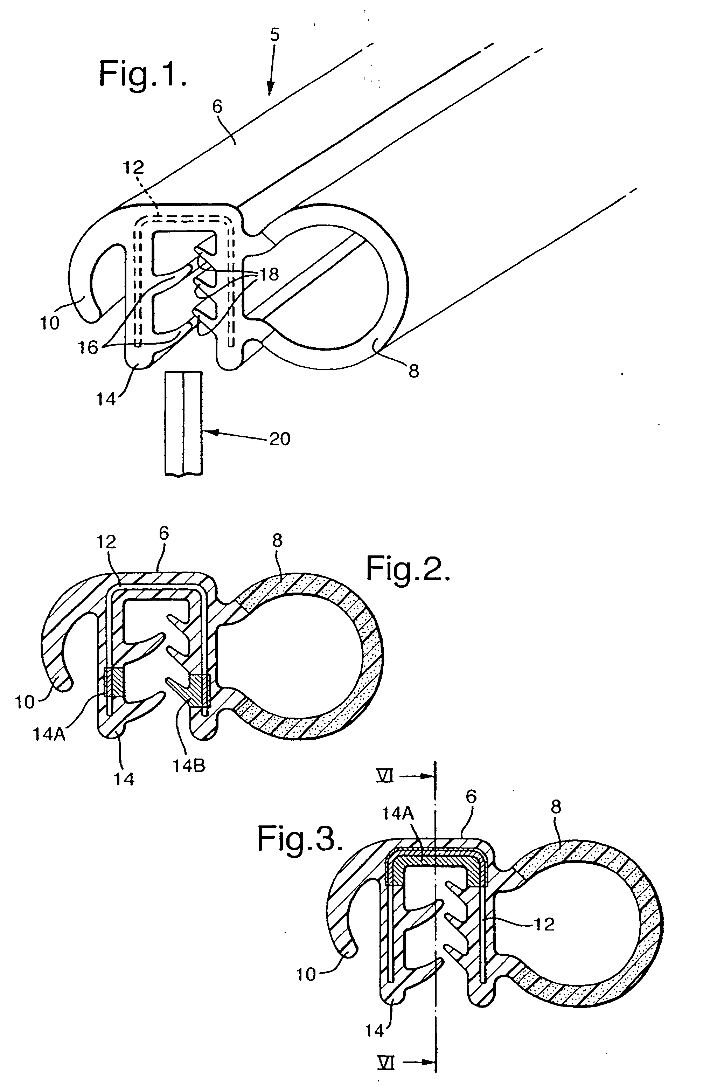

The strip 5 shown in Figure 1 has a channel-shaped gripping portion 6 and a tubular sealing portion 8. The sealing portion 8 is attached to one outside side wall of the gripping portion 6. A lip 10 runs along the opposite side wall of the gripping portion 6.

The gripping portion 6 comprises a channel-shaped reinforcing core or carrier 12 shown in dotted form which is of channel form and extends along the length of the strip. The carrier may have any suitable form. For example, it may be made of flexible and resilient thin channel-shaped metal which may be apertured with slots or slits to increase its flexibility. Instead, the carrier 12 could be in the form of inverted U-shape elements arranged side-by-side along the length of the channel of the strip, adjacent elements being connected together by integral connecting links or entirely disconnected. In another form, the carrier 12 could take the form of looped wire. Other forms of carrier are possible.

As shown in Figure 1, the carrier 12 is embedded in flexible and resilient covering material 14 such as plastics or rubber material. The material 14 is preferably extruded over the carrier 12, such as by means of a cross-head extrusion process. The material 14 provides integral gripping lips 16 and 18 running along the length of the strip on the opposite inside facing walls of the channel of the gripping portion 6.

In addition, the material 14 integrally provides the external lip 10.

The sealing portion 8 is in this example of hollow tubular form. It may be integral with the material 14 of the gripping portion. Instead, however, the sealing portion 8 may be formed separately and secured to the outside of the gripping portion 6 by means of adhesive or otherwise.

In operation, the strip 5 may be secured around the frame of a door or other opening closable by a closure member, the gripping portion 6 being placed over a flange 20 which runs around the frame as shown in Figure 1. For example, in a motor vehicle, the flange 20 may be formed where inner and outer body panels are welded together around a door opening. The lips 16,18 resiliently flex and frictionally grip the sides of the flange 20, and thereby act, in combination with the resilience of the carrier 12, to hold the strip securely on the flange. In this way, the gripping portion 6 supports the sealing portion 8 so that it runs around the frame of the opening and is partially compressed by the closing door so as to produce a weather-proof seal.

The material 14 is advantageously arranged so that different parts of it have different hardnesses. For example, the lips 16,18 are advantageously softer than the channel-shaped material 14, because this improves their frictional grip on the flange 20.

When mounted in this way, the strip 5 ensures that the lip 10 runs around the inside of the frame. The lip 10 may therefore act as a so-called "cosmetic lip", and grip and cover the edge of trimming material on the inside of the vehicle.

In order to fit the strip onto the flange 20 around the bends at the corners of the door frame, it is necessary to bend the strip. Such bending of the strip will, according to the direction of bending, subject some of the material 14 to compressive forces and some of it to tensile forces. In accordance with a feature of the invention, the strips being described are arranged so that one or more predetermined parts of the material 14 is or are made more easily compressible than the remainder of the material. In Figures 2,3,4 and 5, the more easily compressible portions of the material 14 are shown cross-hatched; the normal cross-hatching of the remainder of the sectioned material is omitted for clarity.

As shown in Figure 2 (which is not in accordance with the invention), parts 14A and 14B of the extra-compressible material are positioned along the opposite side walls of the channel of the gripping portion 6, adjacent its mouth. Each such extra-compressible part does not extend fully to the outside wall of the channel of the gripping portion. The extra-compressible part 14B includes one of the lips 18.

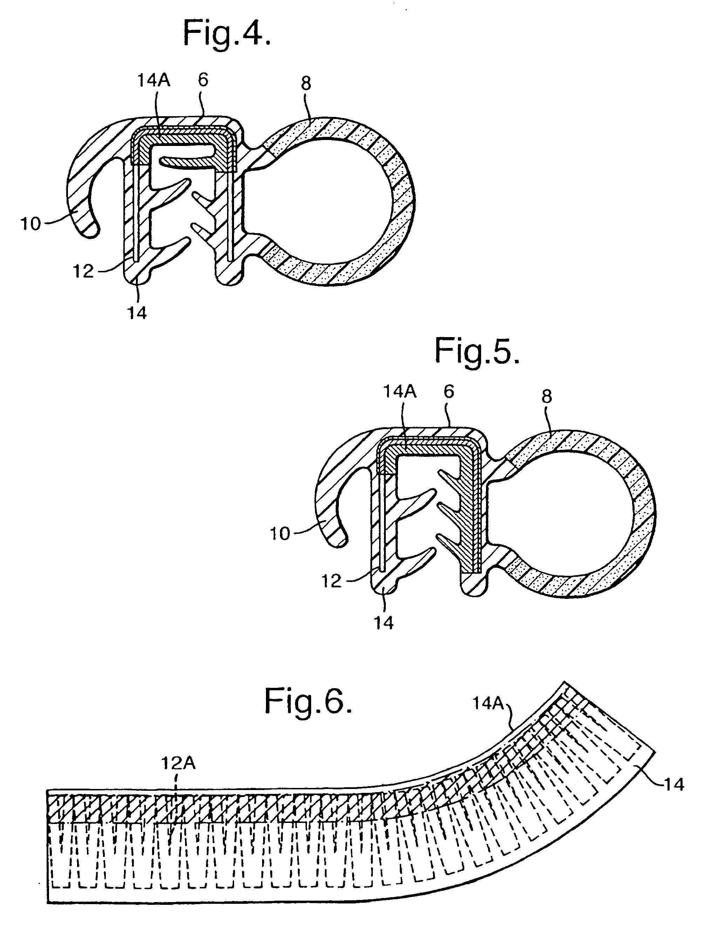

In Figures 3 and 4, the extra-compressible part is shown at 14A and encompasses the base of the channel of the gripping portion 6. Figure 3 is not in accordance with the invention. In Figure 4 (which is in accordance with the invention), the extra-compressible part 14A includes one of the lips 18, and this lip has a larger size than the other two lips 18.

In Figure 5 (which is not in accordance with the invention), the extra-compressible part 14A includes the base of the channel of the gripping portion 5, a relatively small part of one side wall of the channel, and the major part of the opposite channel wall including the lips 18.

The extra-compressible parts 14A,14B preferably extend continuously along the strip in a constant position therealong with reference to the remainder of the material 14.

Figure 6 is a section of the strip 5 of Figure 3, taken on the line VI-VI and illustrates the strip as it is bent to follow a curve. The extra-compressible part 14A will thus be subjected to substantial compressive forces by the bending operation. Its extra-compressibility facilitates the bending operation and ensures that the material 14 can bend smoothly, that is, without disruptive wrinkling or the like. The provision of the extra-compressive parts of the material 14 enable the strip to be bent to follow curves of smaller radius than would otherwise be possible.

The actual position or positions of the extra-compressible material is or are selected according to the expected direction of the bending for the strip. Thus, the extra-compressible parts 14A and 14B in Figure 2 will be of primary benefit when the strip is bent along its longitudinal axis so that the mouth of the channel of the gripping portion 6 is on the inside of the bend.

The extra-compressible material of the parts 14A and 14B is material of which the volume is reduced under compressive forces. Such material is therefore preferably of cellular or foamed construction which therefore provides "cells" containing air or gas which can be compressed, in response to compressive forces applied externally to the material, thereby enabling the material to adopt a smaller volume. The material of the parts 14A,14B therefore contrasts with the remainder of the material 14 which would normally be made of "compact" or non-cellular material. Known techniques enable the parts 14A,14B to be co-extruded with the remainder of the material 14.

By appropriate selection of the positions of the parts of extra-compressible material 14A,14B, the position of the neutral bending axis of the strip can be predetermined: the neutral bending axis is the line along which, when the strip is bent, the material 14 is subjected neither to compressive nor to tensile forces.

Figure 6 shows in dotted form the shape of elements 12A of the carrier 12.

## Claims

1. A channel-shaped strip structure, comprising
(i) channel-shaped flexible material (14,14A),
(ii) a first part (14) of which material undergoes substantially no reduction in volume when compressed, and
(iii) including a second, remaining, part (14A) of the flexible material which is softer than the first part (14), and which undergoes a reduction in volume when compressed
**characterised in that**
(iv) the second part (14A) extends over predetermined portions each comprising less than the whole of the depth of at least one of the side walls of the channel,
(v) and comprises a lip spaced apart from and extending generally parallel to and over the majority of the base of the channel.

2. A strip structure according to claim 1, the first part (14) and the second part (14A) extend continuously along the length of the strip structure.

3. A strip structure according to any preceding claim, **characterised in that** the first part (14) of the flexible material extends over the whole of the channel-shape and overlaps the second part (14A) of the flexible material.

4. A strip structure according to claim 2 or 3, the relative positions within the channel of the first part (14) and the second part (14A) are constant along the length of the strip structure.

5. A strip structure according to any preceding claim, **characterised in that** the flexible material (14,14A) is an elastomer or a plastomer.

6. A strip structure according to any preceding claim, **characterised in that** the flexible material (14,14A) is extruded.

7. A strip structure according to claim 6, **characterised in that** the first part (14) and the second part (14A) of the flexible material are co-extruded.

8. A strip structure according to any preceding claim, **characterised in that** the second part (14A) of the flexible material is disposed in the base of the channel-shape and extends into the side walls thereof immediately adjacent to the base.

9. A strip structure according to any one of claims 1 to 7, **characterised in that** the second part (14A) of the flexible material is disposed adjacent the mouth of the channel.

10. A strip structure according to claim 9, **characterised in that** the second part (14A) of the flexible material is in two portions respectively disposed on opposite sides of the channel.

11. A strip structure according to any one of claims 1 to 7, **characterised in that** the second part (14A) of the flexible material extends through a minor part of the depth of one side wall of the channel-shape, continuously around the base and over a major part of the depth of the other side wall of the channel-shape.

12. A strip structure according to any preceding claim, **characterised in that** the flexible material is formed to provide one or more lips (16,18) extending inwardly of the channel from at least one of the inside side walls thereof and extending along the length of the channel.

13. A strip structure according to any preceding claim, **characterised in that** the second part (14A) of the flexible material comprises cellular material and the first part of the flexible material consists of non-cellular material.

14. A strip structure according to any preceding claim, **characterised by** a reinforcing carrier (12) extending along the length of the channel and embedded within the flexible material (14,14A).

15. A strip structure according to claim 14, **characterised in that** the carrier (12) is channel-shaped.

16. A strip structure according to claim 15, **characterised in that** the reinforcing carrier (12) comprises a plurality of U-shaped elements arranged side-by-side along the length of the channel to define a channel-shape.

17. A method of making a flexible channel-shaped strip structure, comprising the steps of co-extruding first and second parts (14,14A) of an elastomer or plastomer material which together extend contiguously along the length of the strip structure and form the channel shape and are in a constant relative position along the length of the channel shape, the second part (14A) being softer than the first part (14) and which undergoes a reduction in volume when compressed, **characterised in that** the second part (14A) of the material extends over at least one predetermined portion less than the whole of the depth of the channel shape, the second part (14A) comprising a lip spaced apart from and extending generally parallel to and over the majority of the base of the channel.

18. A method according to claim 17, **characterised in that** the second part (14A) of the material forms the whole of the base of the channel shape and the immediately adjacent parts, only, of each side wall of the channel.

19. A method according to claim 17, **characterised in that** the second part (14A) of the material is in two positions disposed respectively in each side wall of the channel shape immediately adjacent the mouth of the channel.

20. A method according to claim 17, **characterised in that** the second part (14A) of the material forms the whole of the base of the channel shape and extends therefrom to form a minor part of the depth of one of the side walls of the channel shape and a major part of the depth of the other side wall of the channel shape.

## Patentansprüche

1. Rinnenförmige Streifenstruktur, die umfasst:
I. rinnenförmiges flexibles Material (14, 14A),
11. wobei eine erster Teil (14) des Materials im Wesentlichen keine Volumenverringerung erfährt, wenn er zusammengedrückt wird, und
III. und es einen zweiten verbleibenden Teil (14A) des flexiblen Materials enthält, der weicher ist als der erste Teil (14) und eine Volumenverringerung erfährt, wenn er zusammengedrückt wird,
**dadurch gekennzeichnet, dass**
IV. sich der zweite Teil (14A) über vorgegebene Abschnitte entdeckt, die jeweils weniger als die gesamte Tiefe wenigstens einer der Seitenwände der Rinne umfassen,
V. und eine Lippe umfasst, die von dem Hauptteil des Bodens der Rinne beabstandet ist und sich im Allgemeinen parallel dazu und darüber erstreckt.

2. Streifenstruktur nach Anspruch 1, wobei sich der erste Teil (14) und der zweite Teil (14A) durchgehend über die Länge der Streifenstruktur erstrecken.

3. Streifenstruktur nach einem der vorangehenden Ansprüche, **dadurch gekennzeichnet, dass** sich der erste Teil (14) des flexiblen Materials über die gesamte Rinnenform erstreckt und den zweiten Teil (14A) des flexiblen Materials überlappt.

4. Streifenstruktur nach Anspruch 2 oder 3, wobei die relativen Positionen des ersten Teils (14) und des zweiten Teils (14A) in der Rinne über die Länge der Streifenstruktur konstant sind.

5. Streifenstruktur nach einem der vorangehenden Ansprüche, **dadurch gekennzeichnet, dass** das flexible Material (14, 14A) ein Elastomer oder ein Plastomer ist.

6. Streifenstruktur nach einem der vorangehenden Ansprüche, **dadurch gekennzeichnet, dass** das flexible Material (14, 14A) extrudiert ist.

7. Streifenstruktur nach Anspruch 6, **dadurch gekennzeichnet, dass der** erste Teil (14) und der zweite Teil (14A) des flexiblen Materials koextrudiert sind.

8. Streifenstruktur nach einem der vorangehenden Ansprüche, **dadurch gekennzeichnet, dass** der zweite Teil (14A) des flexiblen Materials im Boden der Rinnenform angeordnet ist und sich unmittelbar an den Boden angrenzend in die Seitenwände derselben hinein erstreckt.

9. Streifenstruktur nach einem der Ansprüche 1 bis 7, **dadurch gekennzeichnet, dass** der zweite Teil (14A) des flexiblen Materials an die Öffnung der Rinne angrenzend angeordnet ist.

10. Streifenstruktur nach Anspruch 9, **dadurch gekennzeichnet, dass** der zweite Teil (14A) des flexiblen Materials in zwei Abschnitten vorliegt, die jeweils an einander gegenüberliegenden Seiten der Rinne angeordnet sind.

11. Streifenstruktur nach einem der Ansprüche 1 bis 7, **dadurch gekennzeichnet, dass** sich der zweite Teil (14A) des flexiblen Materials über einen kleineren Teil der Tiefe einer Seitenwand der Rinnenform, durchgehend um den Boden herum und über einen größeren Teil der Tiefe der anderen Seitenwand der Rinnenform erstreckt.

12. Streifenstruktur nach einem der vorangehenden Ansprüche, **dadurch gekennzeichnet, dass** das flexible Material so ausgebildet ist, dass eine oder mehrere Lippen (16, 18) vorhanden sind, die sich von wenigstens einer der inneren Seitenwände in das Innere der Rinne erstrecken und sich über die Länge der Rinne erstrecken.

13. Streifenstruktur nach einem der vorangehenden Ansprüche, **dadurch gekennzeichnet, dass** der zweite Teil (14A) des flexiblen Materials zelliges Material umfasst und der erste Teil des flexiblen Material aus nicht-zelligem Material besteht.

14. Streifenstruktur nach einem der vorangehenden Ansprüche, **gekennzeichnet durch** einen verstärkenden Träger (12), der sich über die Länge der Rinne erstreckt und in dem flexiblen Material (14, 14A) eingebettet ist.

15. Streifenstruktur nach Anspruch 14, **dadurch gekennzeichnet, dass** der Träger (12) rinnenförmig ist.

16. Streifenstruktur nach Anspruch 15, **dadurch gekennzeichnet, dass** der verstärkende Träger (12) eine Vielzahl U-förmiger Elemente umfasst, die nebeneinander über die Länge der Rinne angeordnet sind, um eine Rinnenform zu bilden.

17. Verfahren zum Herstellen einer flexiblen rinnenförmigen Streifenstruktur, das die Schritte des Koextrudierens eines ersten und eines zweiten Teils (14, 14A) aus einem Elastomer- oder Plastomermaterial, die sich zusammen aneinandergrenzend über die Länge der Streifenstruktur erstrecken und die Rinnenform bilden und über die Länge der Rinnenform in konstanter relativer Position sind, wobei der zweite Teil (14A) weicher ist als der erste Teil (14) und beim Zusammendrücken eine Volumenverringerung erfährt, **dadurch gekennzeichnet, dass** sich der zweite Teil (14A) des Materials über wenigstens einen vorgegebenen Abschnitt erstreckt, der kleiner ist als die gesamte Tiefe der Rinnenform, und der zweite Teil (14A) eine Lippe umfasst, die von dem Boden der Rinne beabstandet ist und sich im Allgemeinen parallel dazu und über dem Hauptteil desselben erstreckt

18. Verfahren nach Anspruch 17, **dadurch gekennzeichnet, dass** der zweite Teil (14A) des Materials den gesamten Boden der Rinnenform und nur die unmittelbar angrenzenden Teile jeder Seitenwand der Rinne bildet.

19. Verfahren nach Anspruch 17, **dadurch gekennzeichnet, dass** sich der zweite Teil (14A) des Materials an zwei Positionen befindet, die jeweils in jeder Seitenwand der Rinnenform unmittelbar an die Öffnung der Rinne angrenzend angeordnet sind.

20. Verfahren nach Anspruch 17, **dadurch gekennzeichnet, dass** der zweite Teil (14A) des Materials den gesamten Boden der Rinnenform bildet und sich von ihm aus so erstreckt, dass er einen geringeren Teil der Tiefe einer der Seitenwände der Rinnenform und einen größeren Teil der Tiefe der anderen Seitenwand der Rinnenform bildet.

## Revendications

1. Structure de bande en forme de canal, comprenant :
(i) un matériau flexible en forme de canal (14, 14A),
(ii) une première partie (14) duquel matériau ne subit sensiblement aucune réduction de volume lorsqu'elle est comprimée, et
(iii) comprenant une deuxième partie restante (14A) du matériau flexible qui est plus molle que la première partie (14), et qui subit une réduction de volume lorsqu'elle est comprimée
**caractérisée en ce que**
(iv) la deuxième partie (14A) s'étend sur des parties prédéterminées comprenant chacune moins que l'intégralité de la profondeur d'au moins une des parois latérales du canal,
(v) et comprend un rebord espacé de et s'étendant globalement parallèlement à et sur la majorité de la base du canal.

2. Structure de bande selon la revendication 1, la première partie (14) et la deuxième partie (14A) s'étendant de manière continue sur la longueur de la structure de bande.

3. Structure de bande selon l'une quelconque des revendications précédentes, **caractérisée en ce que** la première partie (14) du matériau flexible s'étend sur l'ensemble de la forme de canal et chevauche la deuxième partie (14A) du matériau flexible.

4. Structure de bande selon la revendication 2 ou 3, dans laquelle les positions relatives dans le canal de la première partie (14) et la deuxième partie (14A) sont constantes sur la longueur de la structure de bande.

5. Structure de bande selon l'une quelconque des revendications précédentes, **caractérisée en ce que** le matériau flexible (14, 14A) est un élastomère ou un plastomère.

6. Structure de bande selon l'une quelconque des revendications précédentes, **caractérisée en ce que** le matériau flexible (14, 14A) est extrudé.

7. Structure de bande selon la revendication 6, **caractérisée en ce que** la première partie (14) et la deuxième partie (14A) du matériau flexible sont co-extrudées.

8. Structure de bande selon l'une quelconque des revendications précédentes, **caractérisée en ce que** la deuxième partie (14A) du matériau flexible est disposée dans la base de la forme de canal et s'étend dans les parois latérales de celle-ci immédiatement adjacentes à la base.

9. Structure de bande selon l'une quelconque des revendications 1 à 7, **caractérisée en ce que** la deuxième partie (14A) du matériau flexible est disposée adjacente à l'embouchure du canal.

10. Structure de bande selon la revendication 9, **caractérisée en ce que** la deuxième partie (14A) du matériau flexible est en deux parties disposées respectivement sur des côtés opposés du canal.

11. Structure de bande selon l'une quelconque des revendications 1 à 7, **caractérisée en ce que** la deuxième partie (14A) du matériau flexible s'étend à travers une partie mineure de la profondeur d'une paroi latérale de la forme de canal, de manière continue autour de la base et sur une majeure partie de la profondeur de l'autre paroi latérale de la forme de canal.

12. Structure de bande selon l'une quelconque des revendications précédentes, **caractérisée en ce que** le matériau flexible est formé pour fournir un ou plusieurs rebords (16, 18) s'étendant vers l'intérieur du canal depuis au moine une des parois latérales intérieures de celui-ci et s'étendant sur la longueur du canal.

13. Structure de bande selon l'une quelconque des revendications précédentes, **caractérisée en ce que** la deuxième partie (14A) du matériau flexible comprend un matériau cellulaire et la première partie du matériau flexible est constituée d'un matériau non cellulaire.

14. Structure de bande selon l'une quelconque des revendications précédentes, **caractérisée par** un support de renforcement (12) s'étendant sur la longueur du canal et intégré dans le matériau flexible (14, 14A).

15. Structure de bande selon la revendication 14, **caractérisée en ce que** le support (12) est en forme de canal.

16. Structure de bande selon la revendication 15, **caractérisée en ce que** le support de renforcement (12) comprend une pluralité d'éléments en forme de U agencés côté à côté sur la longueur du canal pour définir une forme de canal.

17. Procédé de fabrication d'une structure de bande en forme de canal, comprenant les étapes consistant à co-extruder des première et deuxième parties (14, 14A) d'un matériau élastomère ou plastomère qui s'étendent conjointement de manière contiguê sur la longueur de la structure de bande et forment la forme de canal et sont en position relative constante sur la longueur de la forme de canal, la deuxième partie (14A) étant plus molle que la première partie (14) et qui subit une réduction de volume lorsqu'elle est comprimée, **caractérisé en ce que** la deuxième partie (14A) du matériau s'étend sur au moins une partie prédéterminée inférieure à l'intégralité de la profondeur de la forme de canal, la deuxième partie (14A) comprenant un rebord espacé de et s'étendant globalement parallèlement à et sur la majorité de la base du canal.

18. Procédé selon la revendication 17, **caractérisé en ce que** la deuxième partie (14A) du matériau forme l'ensemble de la base de la forme de canal et les parties immédiatement adjacentes, uniquement, de chaque paroi latérale du canal.

19. Procédé selon la revendication 17, **caractérisé en ce que** la deuxième partie (14A) du matériau se trouve dans deux positions disposées respectivement dans chaque paroi latérale de la forme de canal immédiatement adjacente à l'embouchure du canal.

20. Procédé selon la revendication 17, **caractérisé en ce que** la deuxième parti (14A) du matériau forme l'ensemble de la base de la forme de canal et s'étend depuis celle-ci pour former une partie mineure de la profondeur d'une des parois latérales de la forme de canal et une majeure partie de la profondeur de l'autre paroi latérale de la forme de canal.
